# FASCICULE DE BREVET EUROPEEN

(11) **EP 2 939 296 B1**
(45) Date de publication et mention de la délivrance du brevet: **07.06.2017**
(21) Numéro de dépôt: 13805867.2
(22) Date de dépôt: 13.12.2013
(51) Int. Cl.: H01M 4/131, H01M 4/136, H01M 4/36, H01M 4/505, H01M 4/525, H01M 4/58, H01M 4/04, H01M 10/0525

(54) **ÉLECTRODE POSITIVE POUR ACCUMULATEUR AU LITHIUM**
POSITIVE ELEKTRODE FÜR LITHIUM-AKKUMULATOR
POSITIVE ELECTRODE FOR LITHIUM ACCUMULATOR

(30) Priorité: 26.12.2012 FR 1262771
(43) Date de publication de la demande: 04.11.2015
(73) Titulaire: SAFT, 93170 Bagnolet (FR)
(72) Inventeur: DUMONT, Erwan, F-33440 Ambares et Lagrave (FR); BOREL, Philippe, F-33520 Bruges (FR); TORET, Yannick, F-33400 Talence (FR)
(74) Mandataire: Hirsch & Associés
(86) Numéro de dépôt international: PCT/EP2013/076521
(87) Numéro de publication internationale: WO 2014/102071

(56) Documents cités:
- EP-A1- 1 619 733
- CA-A1- 2 535 064
- US-A1- 2006 099 495
- US-A1- 2007 015 058
- US-A1- 2009 253 043

## Description

### DOMAINE TECHNIQUE

Le domaine technique de l'invention est celui des matières actives destinées à être utilisées dans l'électrode positive (ou cathode) d'un générateur électrochimique rechargeable (ou accumulateur) au lithium.

### ART ANTERIEUR

Dans un accumulateur, une matière active est une matière qui participe aux réactions électrochimiques pour produire de l'énergie électrique lorsqu'un accumulateur se décharge. Les oxydes lithiés de métaux de transition sont connus comme matière active cathodique utilisable dans les accumulateurs au lithium. Dans l'électrode positive, on utilise le plus souvent comme matière active des oxydes lithiés de métaux de transition de formule générale LiMO₂, où M représente au moins un métal de transition tel que Mn, Ni, Co ou un mélange de ceux-ci. Ces matières actives permettent d'obtenir des performances élevées, notamment en termes de capacité réversible en cyclage et de durée de vie. Par exemple, LiCoO₂ et LiNiO₂ présentent respectivement une capacité d'environ 180 et 220 mAh/g. LiCoO₂ présente cependant deux inconvénients majeurs qui sont sa toxicité et son coût élevé.

Il est également connu d'utiliser un oxyde lithié de manganèse appartenant à la famille des spinelles et ayant pour formule LiMn₂O₄. Ce composé bénéficie d'un faible coût et d'une absence de toxicité, mais présente une capacité réduite (110 mAh/g) et une durée de vie réduite qui provient de la dissolution significative de l'oxyde dans l'électrolyte de l'accumulateur.

D'autres matières actives d'un coût moindre que LiCoO₂ et présentant une bonne stabilité thermique et une absence de toxicité ont été étudiées parmi lesquelles les phosphates lithiés d'au moins un métal de transition, tel que LiFePO₄ et LiMnPO₄.

L'utilisation de LiFePO₄ et de LiMnPO₄ se heurte cependant à leur faible conductivité électronique. Il est généralement nécessaire d'ajouter dans l'électrode une forte proportion d'un matériau conducteur électronique afin d'obtenir un accumulateur présentant de bonnes performances en décharge à un courant élevé. De plus, LiFePO₄ et LiMnPO₄ présentent une mauvaise durée de vie lorsqu'ils sont utilisés comme matériaux d'électrode positive face à une électrode négative de graphite dans un accumulateur fonctionnant en cyclage.

Des recherches ont été menées afin d'obtenir un accumulateur au lithium qui offre une capacité élevée, une stabilité thermique élevée, une sécurité accrue pour l'utilisateur, ainsi que de bonnes performances lorsque l'accumulateur est utilisé dans des conditions de cyclage.

On peut par exemple citer le document EP-A-2 269 954 qui enseigne d'utiliser comme matière active cathodique un mélange comprenant au moins 90% de LiFePO₄ avec moins de 10% d'un oxyde lithié de nickel, cobalt et aluminium. Une telle matière active présente une bonne stabilité thermique ainsi qu'une bonne stabilité en cyclage.

On peut également citer le document EP-A-1 724 860 qui enseigne d'utiliser comme matière active cathodique un mélange comprenant un oxyde lithié de manganèse du type spinelle LiMn₂O₄ avec un phosphate lithié de manganèse du type LiMnPO₄. Il est dit qu'une telle matière active permet de fabriquer un accumulateur au lithium présentant une tension et une capacité élevées, une sécurité d'utilisation élevée ainsi qu'un bonne durée de vie en cyclage.

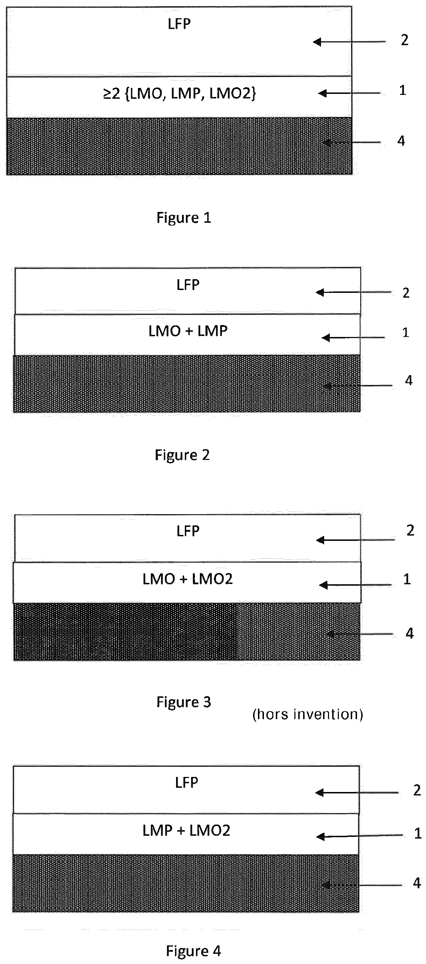

Le document CA 2 535 064 décrit à la figure 2 une électrode comprenant :
a) un collecteur de courant ;
b) un empilement d'au moins deux couches (une première couche dénommée A ou A' et une seconde couche dénommée B ou B') disposé sur au moins une face du collecteur de courant, dans lequel empilement:
   α) la première couche (A ou A') est en contact avec la face du collecteur de courant et peut comprendre un mélange d'au moins deux composés choisis parmi LiCoO₂, LiMn₂O₄, LiNiO₂ et LiNi_{1/3}Co_{1/3}Mn_{1/3}O₂ ;
   β) la seconde couche (B ou B') comprend LiFePO₄.

Le document US 2009/0253043 décrit une électrode comprenant :
- un collecteur de courant,
- une première couche comprenant une matière active à base de LiCoO₂ et
- une seconde couche comprenant une matière active à base de LiFePO₄.

Le document US 2006/0099495 décrit à l'exemple 1 une électrode comprenant :
a) un collecteur de courant sous la forme d'une feuille d'aluminium,
b) un empilement d'une première couche comprenant une première matière active à base de LiNiO₂ et d'une seconde couche comprenant une seconde matière active à base de LiFePO₄.

Le document US 2007/015058 décrit une électrode positive comprenant :
a) un collecteur de courant,
b) une première couche comprenant une matière active choisie parmi les oxydes lithiés de manganèse, les oxyde lithiés de nickel-cobalt-manganèse et les phosphates lithiés de type olivine,
c) une seconde couche comprenant une matière active choisie parmi les oxydes lithiés de cobalt et les oxydes lithiés de nickel.

Le document EP 1 619 733 décrit une électrode comprenant :
a) un collecteur de courant,
b) une première couche au contact du collecteur de courant pouvant comprendre comme matière active un oxyde lithié de manganèse de type spinelle ou un phosphate lithié d'un métal de formule LiMPO₄ où M est choisi parmi Fe, Ni et Mn,
c) une seconde couche externe pouvant comprendre comme matière active un oxyde de cobalt lithié.

On cherche cependant à mettre à disposition un accumulateur présentant une durée de vie en cyclage encore améliorée, notamment par rapport à la durée de vie d'un accumulateur tel que celui décrit dans EP-A-1 724 860.

### RESUME DE L'INVENTION

A cette fin, la présente invention propose une électrode comprenant :
a) un collecteur de courant (4):
b) un empilement d'au moins deux couches (1, 2, 3) disposé sur au moins une face du collecteur de courant, dans lequel
   α) une première couche (1) est en contact avec la face du collecteur de courant et comprend un mélange d'au moins deux composés choisis parmi :
      - un composé i) de formule LiₓMn_{1-y-z}M'_{y}M"_{z}PO₄, abréviée LMP, où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre ; et 0,8≤x≤1,2 ; 0≤y≤0,6 ; 0≤z≤0,2 ;
      - un composé ii) de formule LiₓM_{2-x-y-z-w}M'_{y}M"_{z}M"'_{w}O₂, abréviée LMO2, où M, M', M" et M'" sont choisis dans le groupe consistant en B, Mg, Al, Si, Ca, Ti, V, Cr, Mn, Fe, Co, Ni, Cu, Zn, Y, Zr, Nb et Mo à la condition qu'au moins M ou M' ou M" ou M'" soit choisi parmi Mn, Co, Ni, ou Fe ; M, M', M" et M'" étant différents les uns des autres; et 0,8≤x≤1,4 ; 0≤y≤0,5 ; 0≤z≤0,5 ; 0≤w≤0,2 et x+y+z+w<2;
      - un composé iii) de formule LiₓMn_{2-y-z}M'_{y}M"_{z}O₄, abréviée LMO, où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre; et 1≤x≤1,4 ; 0≤y≤0,6 ; 0≤z≤0,2 ; ledit mélange comprenant le composé i) ;
   β) une couche externe (2) comprenant une matière active comprenant au moins 90% d'un composé de formule LiₓFe_{1-y}M_{y}PO₄, abréviée LFP, où M est choisi dans le groupe consistant en B, Mg, Al, Si, Ca, Ti, V, Cr, Mn, Co, Ni, Cu, Zn, Y, Zr, Nb et Mo ; et 0,8≤x≤1,2 ; 0≤y≤0,6.

Suivant des modes de réalisation préférés, l'invention comprend une ou plusieurs des caractéristiques suivantes :
Le pourcentage massique du composé i) peut être compris entre 10% et 90 % du poids de la première couche. Dans un mode de réalisation, le pourcentage massique du composé i) est compris entre 10% et 30 % du poids de la première couche, de préférence entre 15% et 25% du poids de la première couche.

Selon un mode de réalisation, l'électrode comprend entre la première et la couche externe, au moins une couche intermédiaire (3) comprenant au moins un composé choisi parmi les composés i), ii) et iii). La couche intermédiaire peut comprendre un mélange d'au moins deux composés choisis parmi les composés i), ii) et iii).

Selon un mode de réalisation, la première couche comprend un mélange des composés i) et iii). Le pourcentage massique du composé i) peut être compris entre 10% et 90 % et le pourcentage massique du composé iii) peut être compris entre 90% et 10% du poids de la première couche. Le pourcentage massique du composé i) peut aussi être compris entre 10% et 30 % et le pourcentage massique du composé iii) peut être compris entre 90% et 70% du poids de la première couche. Selon un mode de réalisation, M' ou M" du composé i) est Fe. Les indices y et z de M' et M" dans le composé i) peuvent être inférieurs à 0,40.

Selon un mode de réalisation, M' ou M" du composé iii) est Al. Les indices y et z de M' et M" dans le composé iii) peuvent être inférieurs à 0,10.

Selon un mode de réalisation, la première couche comprend un mélange des composés i) et ii). Le pourcentage massique du composé i) peut être compris entre 10% et 90% et le pourcentage massique du composé ii) peut être compris entre 90% et 10% du poids de la première couche.

Selon un mode de réalisation, la première couche comprend un mélange des composés i), ii) et iii).

Selon un mode de réalisation, le pourcentage en poids de la couche externe est inférieur à 20% du poids de la première couche, de préférence inférieure à 10%, de préférence encore inférieur à 5%.

Selon un mode de réalisation, chaque face du collecteur de courant est recouverte d'un empilement desdites au moins deux couches.

L'invention a également pour objet un accumulateur au lithium comprenant :
- au moins une électrode positive qui est une électrode telle que décrite ci-avant;
- au moins une électrode négative comprenant un matériau capable d'insérer et de désinsérer du lithium dans sa structure.

L'invention a également pour objet un procédé de fabrication d'une électrode comprenant:
a) la mise à disposition d'un collecteur de courant ;
b) le dépôt sur au moins une face du collecteur de courant d'au moins deux couches (1, 2, 3),
   α) une première couche (1) étant en contact avec la face du collecteur de courant et comprenant un mélange d'au moins deux composés choisis parmi :
      - un composé i) de formule LiₓMn_{1-y-z}M'_{y}M"_{z}PO₄ (LMP) où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre; et 0,8≤x≤1,2 ; 0≤y≤0,6 ; 0≤z≤0,2;
      - un composé ii) de formule LiₓM_{2-x-y-z-w}M'_{y}M"_{z}M"'_{w}O₂ (LMO2) où M, M', M" et M'" sont choisis dans le groupe consistant en B, Mg, Al, Si, Ca, Ti, V, Cr, Mn, Fe, Co, Ni, Cu, Zn, Y, Zr, Nb et Mo à la condition qu'au moins M ou M' ou M" ou M'" soit choisi parmi Mn, Co, Ni, ou Fe ; M, M', M" et M'" étant différents les uns des autres; et 0,8≤x≤1,4 ; 0≤y≤0,5 ; 0≤z≤0,5 ; 0≤w≤0,2 et x+y+z+w<2;
      - un composé iii) de formule LiₓMn_{2-y-z}M'_{y}M"_{z}O₄ (LMO) où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre; et 1≤x≤1,4 ; 0≤y≤0,6 ; 0≤z≤0,2 ;
      ledit mélange comprenant le composé i) ;
   β) une couche externe (2) comprenant une matière active comprenant au moins 90% d'un composé de formule LiₓFe_{1-y}M_{y}PO₄ (LFP) où M est choisi dans le groupe consistant en B, Mg, Al, Si, Ca, Ti, V, Cr, Mn, Co, Ni, Cu, Zn, Y, Zr, Nb et Mo; et 0,8≤x≤1,2 ; 0≤y≤0,6.

### BREVE DESCRIPTION DES FIGURES

La figure 1 représente une coupe schématique d'une électrode selon l'invention.
La figure 2 représente une coupe schématique d'une électrode selon un premier mode de réalisation de l'invention.
La figure 3 représente une coupe schématique d'une électrode selon un mode de réalisation ne faisant pas partie de l'invention.
La figure 4 représente une coupe schématique d'une électrode selon un second mode de réalisation de l'invention.
La figure 5 représente une coupe schématique d'une électrode selon un troisième mode de réalisation de l'invention.
La figure 6 représente une coupe schématique d'une électrode selon un quatrième mode de réalisation de l'invention.
La figure 7 représente les résultats d'un test de cyclage à 40°C de trois accumulateurs au lithium comportant différentes électrodes positives ne faisant pas partie de l'invention et une même électrode négative à base de graphite:
   A : électrode positive comprenant une seule couche dans laquelle la matière active consiste en LMP ;
   B : électrode positive comprenant une seule couche dans laquelle la matière active consiste en LMO ;
   C : électrode positive comprenant une seule couche dans laquelle la matière active consiste en un mélange de 80% de LMO et 20% de LMP.

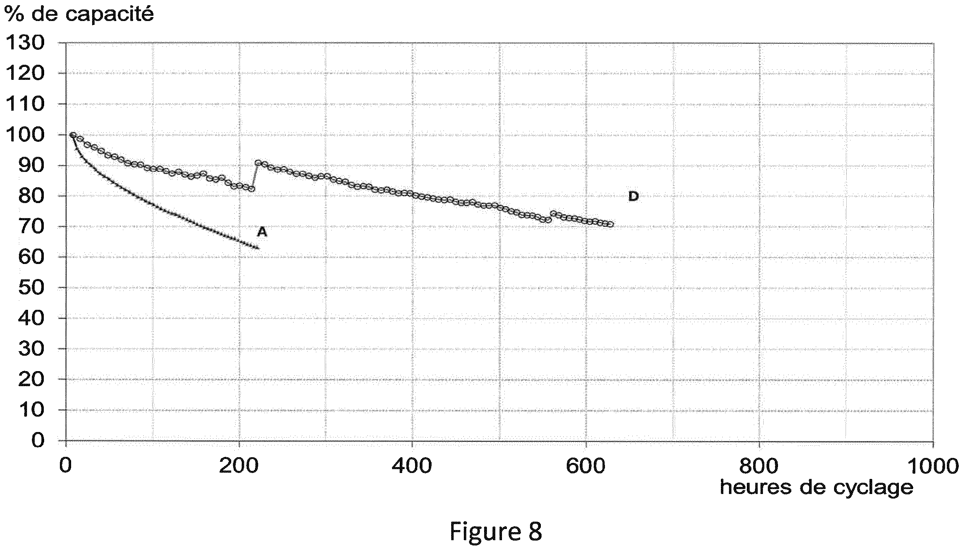

La figure 8 représente les résultats d'un test de cyclage à 40°C de deux accumulateurs au lithium comportant différentes électrodes positives ne faisant pas partie de l'invention et une même électrode négative à base de graphite.
   A : électrode positive comprenant une seule couche dans laquelle la matière active consiste en LMP ;
   D : électrode positive comprenant une première couche dans laquelle la matière active consiste en LMP et une couche externe de LFP.

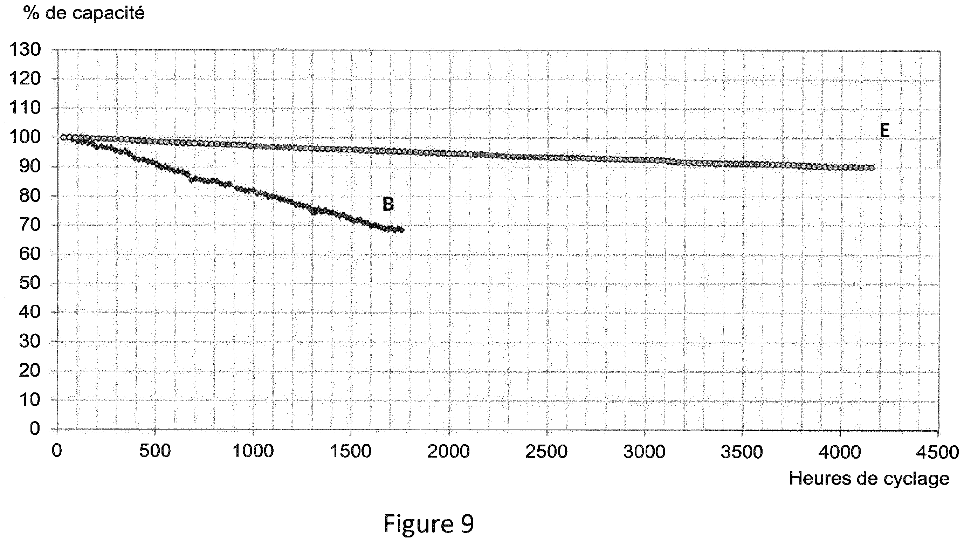

La figure 9 représente les résultats d'un test de cyclage à 40°C de deux accumulateurs au lithium comportant différentes électrodes positives ne faisant pas partie de l'invention et une même électrode négative à base de graphite:
   B : électrode positive comprenant une seule couche dans laquelle la matière active consiste en LMO ;
   E : électrode positive comprenant une première couche dans laquelle la matière active consiste en LMO et une couche externe de LFP.

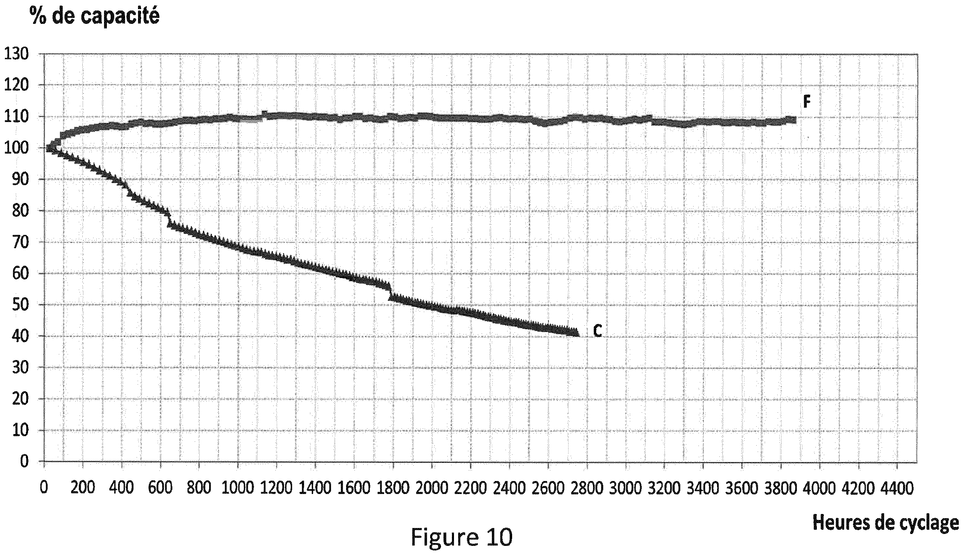

La figure 10 représente les résultats d'un test de cyclage à 40°C de deux accumulateurs au lithium comportant différentes électrodes positives et une même électrode négative à base de graphite.
   C: électrode positive hors de l'invention comprenant une seule couche dans laquelle la matière active consiste en un mélange de 80% de LMO et 20% de LMP ;
   F : électrode positive selon l'invention comprenant une première couche dans laquelle la matière active consiste en un mélange de 80% de LMO et 20% de LMP et une couche externe de LFP.

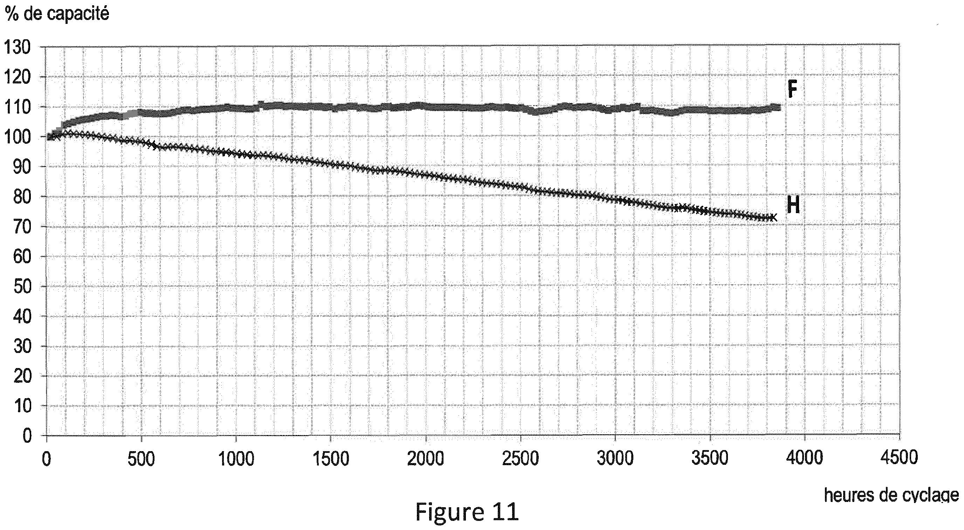

La figure 11 représente les résultats d'un test de cyclage à 40°C de deux accumulateurs au lithium comportant différentes électrodes positives et une même électrode négative à base de graphite:
   F : électrode positive selon l'invention comprenant une première couche dans laquelle la matière active consiste en un mélange de 80% de LMO et 20% de LMP et une couche externe de LFP.
   H : électrode positive hors de l'invention comprenant une seule couche dans laquelle la matière active consiste en un mélange de LMO, de LMP et de LFP.

Bien entendu, la présente invention n'est pas limitée aux exemples et aux modes de réalisation décrits et représentés, mais elle est susceptible de nombreuses variantes accessibles à l'homme de l'art.

### EXPOSE DE MODES DE REALISATION

Il va maintenant être décrit la structure de l'électrode positive objet de l'invention.

Le composé i) a pour formule LiₓMn_{1-y-z}M'_{y}M"_{z}PO₄ (LMP), où M' et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo; avec 0,8≤x≤1,2; 0≤y≤0,6 ; 0≤z≤0,2. Un exemple de ce composé est LiMnPO₄.

Le composé i) peut présenter une ou plusieurs des caractéristiques suivantes:
- M' ou M" est Fe ;
- x=1 ;
- y et/ou z sont inférieurs à 0,40.

Dans un mode de réalisation, y et/ou z sont inférieurs à 0,25.

Le composé ii) a pour formule LiₓM_{2-x-y-z-w}M'_{y}M"_{z}M'"_{w}O₂ (LMO2), où M, M', M" et M'" sont choisis dans le groupe consistant en B, Mg, Al, Si, Ca, Ti, V, Cr, Mn, Fe, Co, Ni, Cu, Zn, Y, Zr, Nb et Mo à la condition que M ou M' ou M" ou M'" soit choisi parmi Mn, Co, Ni, ou Fe ; M, M', M" et M'" étant différents les uns des autres ; avec 0,8≤x≤1,4 ; 0≤y≤0,5 ; 0≤z≤0,5 ; 0≤w≤0,2 et x+y+z+w<2. Des exemples de ce composé sont LiNi_{1/3}Co_{1/3}Mn_{1/3}O₂, LiNi_{0,8}Co_{0,15}Al_{0,05}O₂, LiNi_{0,3}Mn_{0,5}Co_{0,15}Al_{0,15}O₂ et Li_{1,4}Mn_{0,4}Ni_{0,1}Co_{0,1}O₂ dans lesquels Co, Ni et Mn peuvent être partiellement substitués par un ou plusieurs métaux de transition.

Le composé de iii) a pour formule LiₓMn_{2-y-z}M'_{y}M"_{z}O₄ (LMO), où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents ; et 1≤x≤1,4 ; 0≤y≤0,6 ; 0≤z≤0,2. Un exemple de ce composé est la spinelle LiMn₂O₄.

Le composé iii) peut présenter une ou plusieurs des caractéristiques suivantes:
- M' ou M" est Al ;
- x=1;
- y et/ou z sont inférieurs à 0,10.

Le composé de formule LiₓFe_{1-y}M_{y}PO₄ (LFP), où M est choisi dans le groupe consistant en B, Mg, Al, Si, Ca, Ti, V, Cr, Mn, Co, Ni, Cu, Zn, Y, Zr, Nb et Mo ; et 0,8≤x≤1,2 ; 0≤y≤0,6. Un exemple de ce composé est LiFePO₄.

On réalise un empilement de couches sur au moins une des faces du collecteur de courant, cet empilement étant caractérisé en ce que le dépôt de la première couche, c'est-à-dire celle en contact direct avec la surface du collecteur de courant, comprend un mélange de deux composés choisis parmi LMO2, LMP et LMO, ledit mélange comprenant le composé LMP, et en ce que la dernière couche déposée, c'est-à-dire la couche la plus éloignée du collecteur de courant, comprend comme matière active essentiellement LFP, c'est-à-dire au moins 90% en poids de LFP. La couche la plus éloignée du collecteur de courant sera appelée dans ce qui suit couche externe. La matière active de la dernière couche comprend de préférence au moins 95% en poids de LFP, de préférence encore au moins 99% en poids de LFP.

La figure 1 représente schématiquement la structure d'une telle électrode selon un mode de réalisation de l'invention. Cette structure montre de bas en haut :
- un collecteur de courant (4) ;
- un empilement de 2 couches (1, 2) disposé sur une face du collecteur de courant. La couche 1 est en contact direct avec la face supérieure du collecteur de courant. Elle comprend un mélange d'au moins deux composés choisis parmi LMO, LMP et LMO2, LMP étant présent. La couche 2 forme une couche externe et comprend un composé de type LFP. Lorsque la couche 1 comprend un mélange de deux matières actives, ce mélange comprend, par rapport au poids total des matières actives, de préférence entre 10 et 90% de l'une des deux matières actives et de 90 à 10% de l'autre matière active. Les épaisseurs des couches 1 et 2 peuvent être identiques ou différentes. Sur la figure 1, l'empilement de couches n'est réalisé que sur la face supérieure du collecteur de courant. Néanmoins, il est entendu que l'invention ne se limite pas au dépôt d'un empilement sur seulement l'une des deux faces du collecteur de courant mais que l'empilement de couches peut être effectué sur chacune des deux faces du collecteur de courant.

La figure 2 représente un premier mode de réalisation dans lequel la couche 1 comprend un mélange de LMO et de LMP. De préférence, la couche 1 comprend, par rapport au poids total des matières actives, entre 70 à 90% de LMO et de 30 à 10% de LMP.

Dans un mode de réalisation ne faisant pas partie de l'invention, illustré à la figure 3, la première couche 1 comprend un mélange de LMO et de LMO2.

Dans un second mode de réalisation illustré à la figure 4, la première couche 1 comprend un mélange de LMP et de LMO2.

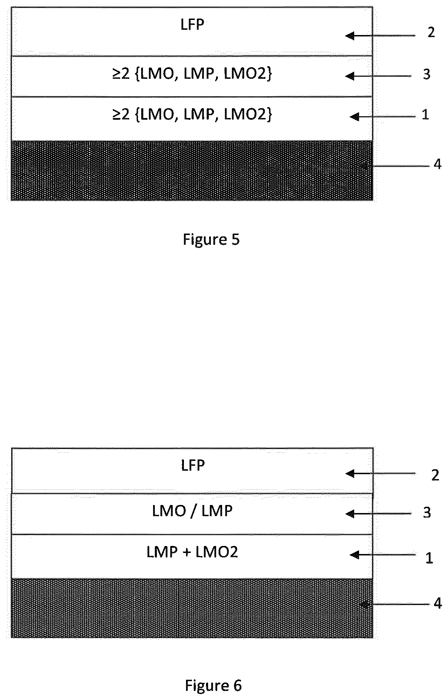

Il est possible de déposer entre la première couche 1 et la couche externe 2, une ou plusieurs couches intermédiaires 3, chaque couche intermédiaire comprenant généralement au moins un composé choisi parmi les composés LMO2, LMP et LMO. Dans un troisième mode de réalisation, une couche intermédiaire comprend au moins deux composés choisis parmi LMO2, LMP et LMO, tel que représenté à la figure 5. L'électrode représentée figure 5 comprend de bas en haut :
- un collecteur de courant (4) ;
- un empilement de 3 couches (1, 2, 3) disposé sur une face du collecteur de courant. La couche 1 est en contact direct avec la face supérieure du collecteur de courant. Elle comprend un mélange d'au moins deux composés choisis parmi LMO, LMP et LMO2, LMP étant présent. La couche 3 repose sur la couche 1 et comprend un mélange d'au moins deux composés choisis parmi LMO, LMP et LMO2, les composés de la couche 3 étant différents de ceux de la couche 1. La couche 2 repose sur la couche 3. La couche 2 forme une couche externe et comprend comme matière active essentiellement LFP.

Dans un quatrième mode de réalisation illustré figure 6, la couche 1 comprend un mélange de LMP et de LMO2 ; la couche 3 comprend LMO ou LMP et la couche 2 forme une couche externe et comprend comme matière active essentiellement LFP.

Le nombre de couches intermédiaires disposées entre la première couche et la couche externe n'est pas limité. Il est possible de déposer une, deux, trois voire davantage de couches avant de déposer la couche externe. Dans le cas d'un dépôt d'un empilement de couches sur chacune des faces du collecteur de courant, les deux empilements sont généralement constitués des mêmes couches. On peut également envisager que les épaisseurs des couches de l'empilement situé sur une face diffèrent des épaisseurs des couches de l'empilement situé sur la face opposée.

Selon l'invention, le dépôt d'une couche est réalisé soit directement sur le collecteur de courant pour la première couche, soit sur une couche sous-jacente déjà formée pour les couches intermédiaires et la couche externe. Le terme "dépôt d'une couche" ne doit pas être compris ici comme correspondant à un enrobage des particules d'un composé par une couche d'un composé différent, comme par exemple lorsque des particules d'une matière active sont recouvertes d'une couche de carbone de manière à les rendre plus conductrices. Un tel enrobage est généralement réalisé au cours de la synthèse de la matière active alors que dans la présente invention, le dépôt d'une couche est pratiqué sur une couche sous-jacente déjà formée.

Il va maintenant être décrit le procédé de dépôt des couches successives sur au moins une des faces du collecteur de courant. On réalise l'empilement de couches en déposant une couche après l'autre. Le dépôt de chaque couche peut se faire par un procédé d'enduction. Dans ce procédé, on prépare une pâte en mélangeant la ou les matière(s) active(s) avec généralement un liant, un composé conducteur électronique et un solvant organique. La pâte est déposée sur un feuillard métallique servant de collecteur de courant. Le dépôt de la pâte peut se faire soit sur l'une des faces du collecteur de courant seulement, soit simultanément sur les deux faces du collecteur de courant. On obtient alors une électrode que l'on sèche pour évaporer le solvant. On peut ensuite comprimer l'électrode au cours d'une étape de calandrage qui consiste à faire passer l'électrode entre deux rouleaux. L'étape de calandrage permet d'ajuster l'épaisseur de la couche déposée. Pour le dépôt des couches ultérieures, on répète les étapes de préparation d'une pâte, dépôt de cette pâte, séchage et calandrage. Le dépôt de chaque couche nécessite la préparation d'une pâte de composition donnée. Les couches déposées ont une épaisseur après calandrage généralement comprise entre 25µm et 300µm. L'épaisseur de la couche externe représente de préférence entre 5% et 30% de l'épaisseur de la première couche.

Le poids de la ou des matière(s) active(s) représente généralement de 80 à 96% en poids du poids de la pâte.

Le liant et le composé conducteur électronique représente chacun généralement de 2 à 10 % en poids du poids de la pâte.

Le collecteur de courant est de préférence un support conducteur bidimensionnel, comme un feuillard plein ou perforé, à base de carbone ou de métal, par exemple en nickel, acier, inox ou aluminium. Généralement, le collecteur de courant de l'électrode positive est en aluminium et son épaisseur est comprise entre 6 µm et 35 µm.

Le liant a pour fonction de renforcer la cohésion entre les particules de matière active ainsi que d'améliorer l'adhérence de la pâte au collecteur de courant. Le liant peut contenir un ou plusieurs des composants suivants : le polyfluorure de vinylidène (PVdF) et ses copolymères, le polytétrafluoroéthylène (PTFE), le polyacrylonitrile (PAN), le polyméthacrylate de méthyle ou de butyle, le polychlorure de vinyle (PVC), le polyvinylformal, les polyesters et les polyéthers blocs amides, les polymères de l'acide acrylique, l'acide méthacrylique, l'acrylamide, l'acide itaconique, l'acide sulfonique, les élastomères et les composés cellulosiques.

Parmi les élastomères utilisables, on peut citer les terpolymères éthylène / propylène / diène (EPDM), les copolymères styrène / butadiène (SBR), les copolymères acrylonitrile / butadiène (NBR), les copolymères bloc styrène / butadiène / styrène (SBS) ou styrène / acrylonitrile / styrène (SIS), les copolymères styrène / éthylène / butylène / styrène (SEBS), les terpolymères styrène / butadiène / vinylpyridine (SBVR), les polyuréthanes (PU), les néoprènes, les polyisobutylènes (PIB), les caoutchoucs butyle, et les mélanges de ceux-ci.

Le composé cellulosique peut être une carboxyméthylcellulose (CMC), une hydroxypropylméthylcellulose (HPMC), une hydroxypropylcellulose (HPC) ou une hydroxyéthylcellulose (HEC).

L'additif conducteur électronique est généralement choisi parmi du graphite, du noir de carbone, du noir d'acétylène, de la suie ou l'un de leurs mélanges.

La présente invention a encore pour objet un accumulateur au lithium comprenant une électrode positive telle que décrite précédemment. L'accumulateur selon l'invention comprend en outre au moins une électrode négative, au moins un séparateur et un électrolyte qui vont maintenant être décrits.

L'électrode négative est préparée de manière classique. Elle est constituée d'un support conducteur servant de collecteur de courant qui est revêtu d'une couche contenant la matière active et comprenant en outre un liant et un matériau conducteur. La matière active est capable d'insérer du lithium dans sa structure. Elle peut être choisie parmi les composés de lithium, un matériau carboné susceptible d'insérer du lithium dans sa structure comme le graphite, le coke, le noir de carbone et le carbone vitreux, et un oxyde mixte de lithium et d'un métal de transition tel que le nickel, le cobalt ou le titane. Elle peut aussi contenir de l'étain, du silicium, des composés à base de carbone et de silicium, des composés à base de carbone et d'étain et des composés à base de carbone, d'étain et de silicium et un oxyde de titane tel que Li₄Ti₅O₁₂. Elle peut comprendre du silicium dont la surface est greffée par un groupe organique tel que décrit dans le document EP-A-2 242 129. Elle peut comprendre un matériau nanocomposite Si C tel que décrit dans le document FR-A-2 885 734. Les anodes utilisées peuvent aussi être constituées d'oxydes, nitrures ou phosphure de métaux de transition.

L'électrolyte est choisi parmi un électrolyte liquide non aqueux comportant un sel de lithium dissous dans un solvant et un électrolyte polymère solide conducteur ionique des ions lithium, comme par exemple l'oxyde de polyéthylène (PEO).

Le sel de lithium est choisi parmi le perchlorate de lithium LiClO₄, l'hexafluorophosphate de lithium LiPF₆, le tétrafluoroborate de lithium LiBF₄, le trifluorométhanesulfonate de lithium LiCF₃SO₃, le bis(fluorosulfonyl)imide de lithium Li(FSO₂)₂N (LiFSI), le trifluorométhanesulfonimide de lithium LiN(CF₃SO₂)₂ (LiTFSI), le trifluorométhanesulfoneméthide de lithium LiC(CF₃SO₂)₃ (LiTFSM), le bisperfluoroéthylsulfonimide de lithium LiN(C₂F₅SO₂)₂ (LiBETI), le 4,5-dicyano-2-(trifluoromethyl) imidazolide de lithium (LiTDI), le bis(oxalatoborate) de lithium (LiBOB), le tris(pentafluoroethyl)trifluorophosphate de lithium LiPF₃(CF₂CF₃)₃ (LiFAP) et les mélanges des précédents.

De préférence, le solvant est un solvant ou un mélange de solvants choisi parmi les solvants organiques usuels notamment les carbonates cycliques saturés, les carbonates cycliques insaturés, les carbonates non cycliques, les esters d'alkyle, comme les formiates, les acétates, les propionates ou les butyrates, les éthers, les lactones comme la gamma-butyrolactone, le bioxyde de tétrahydrothiofène, les solvants nitriles, et les mélanges de ceux-ci. Parmi les carbonates cycliques saturés, on peut citer par exemple le carbonate d'éthylène (EC), le carbonate de fluoroéthylène (FEC), le carbonate de propylène (PC), le carbonate de butylène (BC), et les mélanges de ceux-ci. Parmi les carbonates cycliques insaturés, on peut citer par exemple le carbonate de vinylène (VC), ses dérivés et les mélanges de ceux-ci. Parmi les carbonates non cycliques, on peut citer par exemple le carbonate de diméthyle (DMC), le carbonate de diéthyle (DEC), le carbonate de méthyle éthyle (EMC), le carbonate de dipropyle (DPC) et les mélanges de ceux-ci. Parmi les esters d'alkyle, on peut citer par exemple l'acétate de méthyle, l'acétate d'éthyle, le propionate de méthyle, le propionate d'éthyle, le propionate de butyle, le butyrate de méthyle, le butyrate d'éthyle, le butyrate de propyle et les mélanges de ceux-ci. Parmi les éthers, on peut citer par exemple l'éther de diméthyle (DME) ou de diéthyle (DEE), et les mélanges de ceux-ci.

Le séparateur peut être constitué d'une couche de polypropylène (PP), de polyéthylène (PE), de polytétrafluoroéthylène (PTFE), de polyacrylonitrile (PAN), de polyéthylène-téréphtalate (PET) ou d'un mélange de couches de différentes natures. Les polymères cités peuvent être revêtus d'une couche de céramique.

### EXEMPLES

Les exemples suivants montrent d'une part que le dépôt d'une couche de LFP sur une couche d'un mélange de LMO et de LMP permet d'améliorer de manière significative la durée de vie en cyclage d'un accumulateur par rapport à un accumulateur dont l'électrode positive comprend une couche d'un mélange de LMO et de LMP, non revêtue de LFP. Ils démontrent d'autre part l'existence d'un effet de synergie entre le mélange constitué de LMO et LMP et la couche de LFP.

Dans les exemples ci-dessous, l'électrode positive comprend un support collecteur de courant qui est un feuillard d'aluminium de 20 microns d'épaisseur. On dépose par enduction les couches sur le collecteur de courant. Chaque couche déposée est constituée d'une pâte comprenant 91% d'une ou plusieurs matières actives, 4% en poids de polyfluorure de vinylidène (PVdF) par rapport au poids de la pâte, 5% en poids de noir de carbone et graphite par rapport au poids de la pâte. Lorsque l'électrode comprend une couche externe de LFP comme dans les exemples D, E et F, le poids de LFP représente 10% du poids du mélange du ou des matières actives de la couche sous-jacente.

L'électrode négative comprend un support collecteur de courant qui est un feuillard de cuivre de 12 microns d'épaisseur. Une pâte constituée d'un mélange de particules de graphite, de carboxylméthylcellulose et d'un polymère de butadiène-styrène est déposée par enduction sur une des faces du collecteur de courant. Le poids du mélange de carboxylméthylcellulose et du polymère de butadiène-styrène représente environ 3% du poids de la pâte.

Le séparateur utilisé comprend du polypropylène et du polyéthylène.

L'électrolyte est un sel de lithium dissous dans un solvant comprenant du carbonate de propylène, du carbonate de diméthyle et du carbonate d'éthylène.

### Exemple 1) Effet du mélange LiMn_{1,92}Al_{0,08}O₄ (LMO) + LiFe_{0,2}Mn_{0,8}PO₄ (LMP) sur la durée de vie en cyclage :

Des accumulateurs comportant différentes électrodes positives hors de l'invention et une même électrode négative à base de graphite ont été fabriqués. L'accumulateur A comprend une électrode positive dans laquelle la matière active est LiFe_{0,2}Mn_{0,8}PO₄. L'accumulateur B comprend une électrode positive dans laquelle la matière active est LiMn_{1,92}Al_{0,08}O₄. L'accumulateur C comprend une électrode positive dans laquelle la matière active est un mélange constitué de 80% de LiMn_{1,92}Al_{0,08}O₄ et 20% de LiFe_{0,2}Mn_{0,8}PO₄.

Les accumulateurs A, B et C ont été soumis à un test de cyclage à 40°C comprenant une succession de cycles de charge-décharge de l'accumulateur. La charge est effectuée à un courant de C/(20) jusqu'à atteindre une tension de 4,2 V. La décharge est effectuée à un courant de C/20.

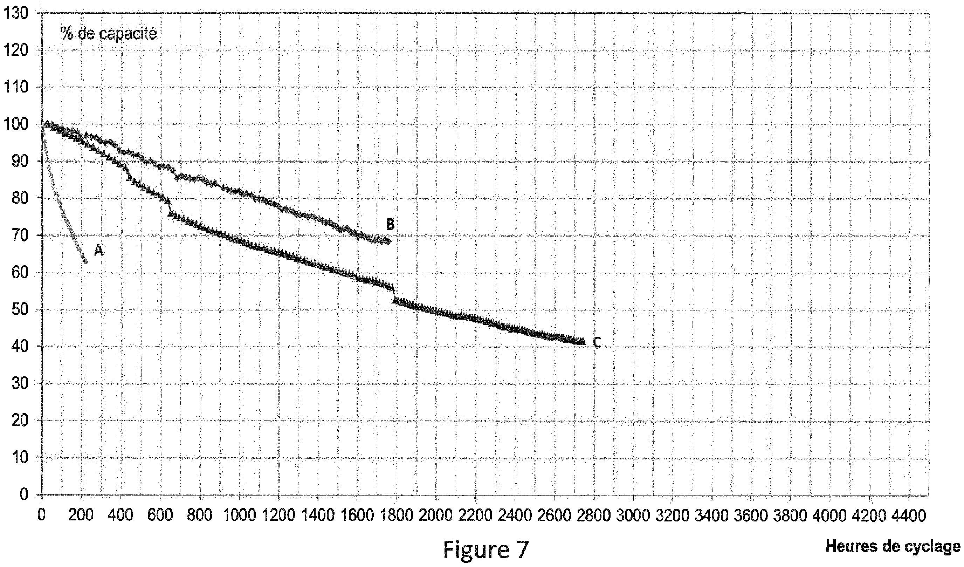

La figure 7 représente le pourcentage de capacité restituée pour chacun des accumulateurs en fonction du nombre d'heures de cyclage. Cette figure montre que l'accumulateur B dont l'électrode positive contient LiMn_{1,92}Al_{0,08}O₄ présente de meilleures performances en cyclage que l'accumulateur A dont l'électrode positive contient LiFe_{0,2}Mn_{0,8}PO₄. En effet, la perte de capacité de l'accumulateur B est de 30% après 1700 heures de cyclage alors que la perte de capacité de l'accumulateur A est aussi de 30%, mais après seulement 150 heures de cyclage. L'accumulateur C présente une perte de capacité intermédiaire entre celle de l'accumulateur A et celle de l'accumulateur B.

### Exemple 2) : Effet de la présence d'une couche externe de LiFePO₄ (LFP) sur la durée de vie en cyclage

Des accumulateurs comportant différentes électrodes positives hors de l'invention et une même électrode négative à base de graphite ont été fabriqués.

Les accumulateurs A et B sont tels que décrits dans l'exemple 1.

L'accumulateur D diffère de l'accumulateur A en ce que la couche comprenant LiFe_{0,2}Mn_{0,8}PO₄ en contact avec le collecteur de courant est recouverte par une couche comprenant LiFePO₄.

L'accumulateur E diffère de l'accumulateur B en ce que la couche comprenant LiMn_{1,92}Al_{0,08}O₄ en contact avec le collecteur de courant est recouverte par une couche comprenant LiFePO₄.

Les accumulateurs D et E ont été soumis à un test de cyclage à 40°C tel que décrit dans l'exemple 1 et la capacité restituée au cours du cyclage a été comparée à celles restituées pour les accumulateurs A et B respectivement.

La figure 8 représente le pourcentage de capacité restituée pour les accumulateurs A et D en fonction du nombre d'heures de cyclage. Cette figure montre que la capacité restituée par l'accumulateur D est supérieure à celle restituée par l'accumulateur A. En effet, la perte de capacité de l'accumulateur D est de 30% après 600 heures de cyclage alors que la perte de capacité de l'accumulateur A est aussi de 30% mais après seulement 150 heures de cyclage.

La figure 9 représente le pourcentage de capacité restituée pour les accumulateurs B et E en fonction du nombre d'heures de cyclage. Cette figure montre que la capacité restituée par l'accumulateur E est supérieure à celle restituée par l'accumulateur B. En effet, après 1700 heures de cyclage, la capacité restituée de l'accumulateur E est d'environ 95% alors que celle de l'accumulateur B n'est que de 70%.

Ceci démontre donc l'effet bénéfique sur la durée de vie en cyclage procuré par la présence d'une couche de LiFePO₄.

### Exemple 3 : Effet synergétique du mélange LiFe_{0,2}Mn_{0,8}PO₄ (LMP) + LiMn_{1,92}Al_{0,08}O₄ (LMO) sur la durée de vie en cyclage.

Des accumulateurs comportant différentes électrodes positives et une même électrode négative à base de graphite ont été fabriqués.

L'accumulateur C est tel que décrit dans l'exemple 1.

L'accumulateur F possède une électrode positive selon l'invention. Celle-ci diffère de celle de l'accumulateur C en ce que la couche comprenant un mélange de LiFe_{0,2}Mn_{0,8}PO₄ et de LiMn_{1,92}Al_{0,08}O₄ en contact avec le collecteur de courant est recouverte par une couche comprenant LiFePO₄.

La figure 10 représente le pourcentage de capacité restituée pour les accumulateurs C et F en fonction du nombre d'heures de cyclage. Cette figure montre que la capacité restituée par l'accumulateur F est nettement supérieure à celle restituée par l'accumulateur C. En effet, la perte de capacité de l'accumulateur F est négligeable après 1700 heures de cyclage, alors que la perte de capacité de l'accumulateur C est d'environ 40% pour une même durée de cyclage.

On remarque d'autre part que la capacité restituée de l'accumulateur F augmente dès le début du cyclage et atteint progressivement sa valeur maximale de 110% après plusieurs cycles d'entrainement (correspondant à environ 800 heures de cycles). Au contraire, les accumulateurs A, B, C, D et E comprenant une électrode hors de l'invention montrent une baisse de la capacité restituée dès les premiers cycles.

Le Tableau 1 ci-dessous récapitule les différentes pertes de capacité mesurées pour les accumulateurs A, B, C, D, E et F après 100 heures de cyclage.

**Tableau 1**

| Matière active | sans couche externe de LiFePO₄ | avec couche externe de LiFePO₄ |
|---|---|---|
| LiMn_{1,92}Al_{0,08}O₄ | accumulateur B* : -1,88 % (-) | accumulateur E* : -0,25 % (+) |
| LiFe_{0,2}Mn_{0,8}PO₄ | accumulateur A* : -14,60 % (---) | accumulateur D* : -3,75 % (- -) |
| 80 % LiMn_{1,92}Al_{0,08}O₄ + 20 % LiFe_{0,2}Mn_{0,8}PO₄ | accumulateur C* : -2,04 % (- -) | accumulateur F** : ∼ 0 % (+ + +) |

| | | |
|---|---|---|
| * hors invention ** selon l'invention | | |

Ces résultats montrent l'effet de synergie apporté par le mélange des matières actives LiMn_{1,92}Al_{0,08}O₄ et LiFe_{0,2}Mn_{0,08}PO₄ avec la couche externe comprenant LiFePO₄. En effet, sachant d'une part que l'accumulateur E comprenant une électrode positive comprenant une couche de LiMn_{1,92}Al_{0,08}O₄ recouverte de LiFePO₄ présente une perte de capacité de -0,25 % et d'autre part que l'accumulateur D comprenant une électrode positive comprenant une couche de LiFe_{0,2}Mn_{0,08}PO₄ recouverte de LiFePO₄ présente une perte de capacité de -3,75 %, on s'attendrait à ce qu'un accumulateur comprenant une électrode positive comprenant une couche constituée d'un mélange de 80 % LiMn_{1,92}Al_{0,08}O₄ et 20 % LiFe_{0,2}Mn_{0,8}PO₄ recouverte de LiFePO₄ présente une perte de capacité comprise entre - 3,75 % et -0,25 %. Or, on constate qu'en réalité, la perte de capacité d'un tel accumulateur (accumulateur F) est d'environ 0 %, soit en dehors de la gamme comprise entre -3,75% et - 0,25%. Ceci prouve que l'utilisation du mélange de LiMn_{1,92}Al_{0,08}O₄ et LiFe_{0,2}Mn_{0,08}PO₄ permet d'amplifier l'effet bénéfique du revêtement de LiFePO₄.

### Exemple 4: Effet de LiFePO₄ selon qu'il est utilisé en mélange avec deux autres matières actives dans la couche en contact avec le collecteur de courant ou dans la couche externe.

Des accumulateurs comportant différentes électrodes positives et une même électrode négative à base de graphite ont été fabriqués.

L'accumulateur F est tel que décrit dans l'exemple 3.

L'accumulateur H diffère de l'accumulateur F en ce que l'électrode ne comprend pas de couche externe LiFePO₄. LiFePO₄ est mélangé à LiMn_{1,92}Al_{0,08}O₄ et LiFe_{0,2}Mn_{0,8}PO₄ et le mélange est utilisé pour former la couche en contact avec le collecteur de courant.

La figure 11 représente le pourcentage de capacité restituée pour les accumulateurs F et H en fonction du nombre d'heures de cyclage. Cette figure montre que la capacité restituée par l'accumulateur F est nettement supérieure à celle restituée par l'accumulateur H. En effet, la perte de capacité de l'accumulateur F est négligeable après 1700 heures de cyclage, alors que la perte de capacité de l'accumulateur H est d'environ 10 % pour une même durée de cyclage.

Un simple mélange des trois matières actives LiMn_{1,92}Al_{0,08}O₄, LiFe_{0,2}Mn_{0,8}PO₄ et LiFePO₄ ne permet pas d'obtenir une amélioration de la durée de vie en cyclage aussi importante que celle obtenue lorsque LiFePO₄ est utilisé dans la couche externe.

L'exemple 3 montre que lorsque l'électrode selon l'invention est utilisée comme électrode positive d'un accumulateur au lithium, celui-ci présente une excellente durée de vie en cyclage. En outre, l'électrode selon l'invention offre également les avantages suivants :
- elle permet d'utiliser des matières actives du type LMO, LFP et LMP qui présentent une meilleure stabilité thermique que les matières actives de type LMO2. Les accumulateurs selon l'invention offrent donc une sécurité d'utilisation accrue en comparaison avec ceux dont l'électrode contient comme matière active positive des composés de type LMO2.
- l'association de LMO avec LMP permet de compenser le fonctionnement médiocre à froid ou à température ambiante de LMP lorsqu'il est utilisé seul.
- la résistivité d'une électrode comprenant comme matière active un mélange de LMP et de LMO est inférieure à celle d'une électrode comprenant uniquement LMP ou LFP comme matière active.
- elle permet de maintenir bas le prix de fabrication d'une électrode positive d'accumulateur au lithium, les matières actives de type LMO, LMP et LFP étant moins coûteuses que celles du type LMO2.

## Revendications

1. Electrode comprenant :
a) un collecteur de courant (4):
b) un empilement d'au moins deux couches (1, 2, 3) disposé sur au moins une face du collecteur de courant, dans lequel
α) une première couche (1) est en contact avec la face du collecteur de courant et comprend un mélange d'au moins deux composés choisis parmi :
- un composé i) de formule LiₓMn_{1-y-z}M'_{y}M"_{z}PO₄ où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre ; et 0,8≤x≤1,2 ; 0≤y≤0,6 ; 0≤z≤0,2 ;
- un composé ii) de formule LiₓM_{2-x-y-z-w}M'_{y}M"_{z}M'"_{w}O₂ où M, M', M" et M"' sont choisis dans le groupe consistant en B, Mg, Al, Si, Ca, Ti, V, Cr, Mn, Fe, Co, Ni, Cu, Zn, Y, Zr, Nb et Mo à la condition qu'au moins M ou M' ou M" ou M'" soit choisi parmi Mn, Co, Ni, ou Fe ; M, M', M" et M'" étant différents les uns des autres; et 0,8≤x≤1,4 ; 0≤y≤0,5 ; 0≤z≤0,5 ; 0≤w≤0,2 et x+y+z+w<2;
- un composé iii) de formule LiₓMn_{2-y-z}M'_{y}M"_{z}O₄ où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre; et 1≤x≤1,4 ; 0≤y≤0,6 ; 0≤z≤0,2 ;
ledit mélange comprenant le composé i) ;
β) une couche externe (2) comprend une matière active comprenant au moins 90% d'un composé de formule LiₓFe_{1-y}M_{y}PO₄ où M est choisi dans le groupe consistant en B, Mg, Al, Si, Ca, Ti, V, Cr, Mn, Co, Ni, Cu, Zn, Y, Zr, Nb et Mo ; et 0,8≤x≤1,2 ; 0≤y≤0,6.

2. Electrode selon la revendication 1, comprenant entre la première et la couche externe, au moins une couche intermédiaire (3) comprenant au moins un composé choisi parmi les composés i), ii) et iii).

3. Electrode selon la revendication 2, dans laquelle la couche intermédiaire comprend un mélange d'au moins deux composés choisis parmi les composés i), ii) et iii).

4. Electrode selon l'une des revendications 1 à 3, dans laquelle la première couche comprend un mélange des composés i) et iii).

5. Electrode selon la revendication 4, dans laquelle M' ou M" du composé i) est Fe.

6. Electrode selon l'une des revendications 4 et 5, dans laquelle y et/ou z sont inférieurs à 0,40.

7. Electrode selon l'une des revendications 4 à 6, dans laquelle M' ou M" du composé iii) est Al.

8. Electrode selon la revendication 7, dans laquelle y et/ou z du composé iii) sont inférieurs à 0,10.

9. Electrode selon l'une des revendications 4 à 8, dans laquelle le pourcentage massique du composé i) est compris entre 10% et 90% et le pourcentage massique du composé iii) est compris entre 90% et 10% du poids de la première couche.

10. Electrode selon la revendication 9, dans laquelle le pourcentage massique du composé i) est compris entre 10% et 30% et le pourcentage massique du composé iii) est compris entre 90% et 70% du poids de la première couche.

11. Electrode selon l'une des revendications 1 à 3, dans laquelle la première couche comprend en outre un mélange des composés ii) et iii).

12. Electrode selon l'une des revendications 1 à 3, dans laquelle la première couche comprend un mélange des composés i) et ii).

13. Electrode selon la revendication 12, dans laquelle le pourcentage massique du composé i) est compris entre 10% et 90% et le pourcentage massique du composé ii) est compris entre 90% et 10% du poids de la première couche.

14. Electrode selon l'une des revendications précédentes, dans laquelle le pourcentage en poids de la couche externe est inférieur à 20% du poids de la première couche, de préférence inférieure à 10%, de préférence encore inférieur à 5%.

15. Electrode selon l'une des revendications précédentes, dans laquelle chaque face du collecteur de courant est recouverte d'un empilement desdites au moins deux couches.

16. Accumulateur au lithium comprenant :
- au moins une électrode positive qui est une électrode selon l'une des revendications précédentes;
- au moins une électrode négative comprenant un matériau capable d'insérer et de désinsérer du lithium dans sa structure.

17. Procédé de fabrication d'une électrode comprenant:
a) la mise à disposition d'un collecteur de courant ;
b) le dépôt sur au moins une face du collecteur de courant d'au moins deux couches (1, 2, 3),
α) une première couche (1) étant en contact avec la face du collecteur de courant et comprenant un mélange d'au moins deux composés choisis parmi :
- un composé i) de formule LiₓMn_{1-y-z}M'_{y}M"_{z}PO₄ où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre; et 0,8≤x≤1,2 ; 0≤y≤0,6 ; 0≤z≤0,2;
- un composé ii) de formule LiₓM_{2-x-y-z-w}M'_{y}M"_{z}M'"_{w}O₂ où M, M', M" et M"' sont choisis dans le groupe consistant en B, Mg, Al, Si, Ca, Ti, V, Cr, Mn, Fe, Co, Ni, Cu, Zn, Y, Zr, Nb et Mo à la condition qu'au moins M ou M' ou M" ou M'" soit choisi parmi Mn, Co, Ni, ou Fe ; M, M', M" et M'" étant différents les uns des autres; et 0,8≤x≤1,4 ; 0≤y≤0,5 ; 0≤z≤0,5 ; 0≤w≤0,2 et x+y+z+w<2;
- un composé iii) de formule LiₓMn_{2-y-z}M'_{y}M"_{z}O₄ où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre; et 1≤x≤1,4 ; 0≤y≤0,6 ; 0≤z≤0,2 ;
ledit mélange comprenant le composé i) ;
β) une couche externe (2) comprenant une matière active comprenant au moins 90% d'un composé de formule LiₓFe_{1-y}M_{y}PO₄ où M est choisi dans le groupe consistant en B, Mg, Al, Si, Ca, Ti, V, Cr, Mn, Co, Ni, Cu, Zn, Y, Zr, Nb et Mo; et 0,8≤x≤1,2 ; 0≤y≤0,6.

## Patentansprüche

1. Elektrode, die Folgendes umfasst:
a) einen Stromkollektor (4);
b) einen Stapel von mindestens zwei Schichten (1, 2, 3), die auf mindestens einer Fläche des Stromkollektors angeordnet sind, wobei
α) eine erste Schicht (1) mit der Fläche des Stromkollektors in Kontakt steht und eine Mischung von mindestens zwei Verbindungen umfasst, ausgewählt aus:
- einer Verbindung i) der Formel LiₓMn_{1-y-z}M'_{y}M_{"z}PO₄, wobei M' und M" aus der Gruppe bestehend aus B, Mg, Al, Si, Ca, Ti, V, Cr, Fe, Co, Ni, Cu, Zn, Y, Zr, Nb und Mo ausgewählt sind; wobei M' und M" voneinander verschieden sind; und 0,8≤x≤1,2; 0≤y≤0,6; 0≤z≤0,2;
- einer Verbindung ii) der Formel LiₓM_{2-x-y-z-w}M'_{y}M"_{z}M'"_{w}O₂, wobei M, M', M" und M'" aus der Gruppe bestehend aus B, Mg, Al, Si, Ca, Ti, V, Cr, Mn, Fe, Co, Ni, Cu, Zn, Y, Zr, Nb und Mo ausgewählt sind, vorausgesetzt dass zumindest M oder M' oder M" oder M'" Mn, Co, Ni oder Fe ist; wobei M, M', M" und M'" voneinander verschieden sind; und 0,8≤x≤1,4; 0≤y≤0,5; 0≤z≤0,5; 0≤w≤0,2 und x+y+z+w<2;
- einer Verbindung iii) der Formel LiₓMn_{2-y-z}M'_{y}M"_{z}O₄, wobei M' und M" aus der Gruppe bestehend aus B, Mg, Al, Si, Ca, Ti, V, Cr, Fe, Co, Ni, Cu, Zn, Y, Zr, Nb und Mo ausgewählt sind; wobei M' und M" voneinander verschieden sind; und 1≤x≤1,4; 0≤y≤0,6; 0≤z≤0,2;
wobei die Mischung die Verbindung i) umfasst;
β) eine äußere Schicht (2) umfasst ein aktives Material das mindestens 90% einer Verbindung der Formel LiₓFe_{1-y}M_{y}PO₄ umfasst, wobei M aus der Gruppe bestehend aus B, Mg, Al, Si, Ca, Ti, V, Cr, Mn, Co, Ni, Cu, Zn, Y, Zr, Nb und Mo ausgewählt ist; und 0,8≤x≤1,2; 0≤y≤0,6.

2. Elektrode nach Anspruch 1, , die zwischen der ersten und der äußeren Schicht, mindestens eine Zwischenschicht (3) umfasst, die mindestens eine Verbindung umfasst, die ausgewählt ist aus den Verbindungen i), ii) und iii).

3. Elektrode nach Anspruch 2, wobei die Zwischenschicht eine Mischung von mindestens zwei Verbindungen umfasst, die ausgewählt ist aus den Verbindungen i), ii) und iii).

4. Elektrode nach einem der Ansprüche 1 bis 3, wobei die erste Schicht eine Mischung der Verbindungen i) und iii) umfasst.

5. Elektrode nach Anspruch 4, wobei M' oder M" der Verbindung i) Fe ist.

6. Elektrode nach einem der Ansprüche 4 und 5, wobei y und/oder z kleiner als 0,40 sind.

7. Elektrode nach einem der Ansprüche 4 bis 6, wobei M' oder M" der Verbindung iii) Al ist.

8. Elektrode nach Anspruch 7, wobei y und/oder z der Verbindung iii) kleiner als 0,10 sind.

9. Elektrode nach einem der Ansprüche 4 bis 8, wobei das Masseprozent der Verbindung i) zwischen 10% und 90% und das Masseprozent der Verbindung iii) zwischen 90% und 10% des Gewichts der ersten Schicht liegt.

10. Elektrode nach Anspruch 9, wobei das Masseprozent der Verbindung i) zwischen 10% und 30% und das Masseprozent der Verbindung iii) zwischen 90% und 70% des Gewichts der ersten Schicht liegt.

11. Elektrode nach einem der Ansprüche 1 bis 3, wobei die erste Schicht ferner eine Mischung der Verbindungen ii) und iii) umfasst.

12. Elektrode nach einem der Ansprüche 1 bis 3, wobei die erste Schicht eine Mischung der Verbindungen i) und ii) umfasst.

13. Elektrode nach Anspruch 12, wobei das Masseprozent der Verbindung i) zwischen 10% und 90% und das Masseprozent der Verbindung ii) zwischen 90% und 10% des Gewichts der ersten Schicht liegt.

14. Elektrode nach einem der vorhergehenden Ansprüche, wobei das Masseprozent der äußeren Schicht kleiner als 20% des Gewichts der ersten Schicht ist, vorzugsweise kleiner als 10%, bevorzugter kleiner als 5%.

15. Elektrode nach einem der vorhergehenden Ansprüche, wobei jede Fläche des Stromkollektors mit einem Stapel von mindestens zwei der Schichten bedeckt ist.

16. Lithium-Akkumulator, der Folgendes umfasst:
- mindestens eine positive Elektrode, die eine Elektrode nach einem der vorhergehenden Ansprüche ist;
- mindestens eine negative Elektrode, die ein Material umfasst, das Lithium in ihre Struktur einbringen und aus dieser abführen kann.

17. Verfahren zur Herstellung einer Elektrode, das Folgendes umfasst:
a) Bereitstellen eines Stromkollektors;
b) Abscheiden von mindestens zwei Schichten (1,2 3) auf mindestens einer Fläche des Stromkollektors, wobei
α) eine erste Schicht (1) mit der Fläche des Stromkollektors in Kontakt steht und eine Mischung von mindestens zwei Verbindungen umfasst, ausgewählt aus:
- einer Verbindung i) der Formel LiₓMn_{1-y-z}M'_{y}M"_{z}PO₄, wobei M' und M" aus der Gruppe bestehend aus B, Mg, Al, Si, Ca, Ti, V, Cr, Fe, Co, Ni, Cu, Zn, Y, Zr, Nb und Mo ausgewählt sind; wobei M' und M" voneinander verschieden sind; und 0,8≤x≤1,2; 0≤y≤0,6; 0≤z≤0,2;
- einer Verbindung ii) der Formel LiₓM_{2-x-y-z-w}M'_{y}M"_{z}M'"_{w}O₂, wobei M, M', M" und M'" aus der Gruppe bestehend aus B, Mg, Al, Si, Ca, Ti, V, Cr, Mn, Fe, Co, Ni, Cu, Zn, Y, Zr, Nb und Mo ausgewählt sind, vorausgesetzt dass zumindest M oder M' oder M" oder M'" Mn, Co, Ni oder Fe ist; wobei M, M', M" und M'" voneinander verschieden sind; und 0,8≤x≤1,4; 0≤y≤0,5; 0≤z≤0,5; 0≤w≤0,2 und x+y+z+w<2;
- einer Verbindung iii) der Formel LiₓMn_{2-y-z}M'_{y}M"_{z}O₄, wobei M' und M" aus der Gruppe bestehend aus B, Mg, Al, Si, Ca, Ti, V, Cr, Fe, Co, Ni, Cu, Zn, Y, Zr, Nb und Mo ausgewählt sind; wobei M' und M" voneinander verschieden sind; und 1≤x≤1,4; 0≤y≤0,6; 0≤z≤0,2;
wobei die Mischung die Verbindung i) umfasst;
β) eine äußere Schicht (2) die ein aktives Material umfasst, das mindestens 90% einer Verbindung der Formel LiₓFe_{1-y}M_{y}PO₄ umfasst, wobei M aus der Gruppe bestehend aus B, Mg, Al, Si, Ca, Ti, V, Cr, Mn, Co, Ni, Cu, Zn, Y, Zr, Nb und Mo ausgewählt ist; und 0,8≤x≤1,2; 0≤y≤0,6.

## Claims

1. An electrode comprising:
a) a current collector (4);
b) a stack of at least two layers (1, 2, 3) disposed on at least one face of the current collector, in which :
α) a first layer (1) is in contact with the face of the current collector and comprises a mixture of at least two compounds chosen from:
- a compound i) of formula LiₓMn_{1-y-z}M'_{y}M"_{z}PO₄ where M' and M" are selected from the group consisting of B, Mg, Al, Si, Ca, Ti, V, Cr, Fe, Co, Ni, Cu, Zn, Y, Zr, Nb and Mo; M' and M" being different from each other; and 0.8 ≤x≤ 1.2, 0 ≤y ≤0.6, 0 ≤z ≤0.2;
- a compound ii) of formula LiₓM_{2-x-y-z-w}M'_{y}M"_{z}M'"_{w}O₂ where M, M', M" and M'" are selected from the group consisting of B, Mg, Al, Si, Ca, Ti, V, Cr, Mn, Fe, Co, Ni, Cu, Zn, Y, Zr, Nb and Mo, provided that at least M or M' or M" or M'" is selected from Mn, Co, Ni, or Fe; M, M', M" and M'" being different from each other; and 0.8 ≤x≤ 1.4; 0 ≤y ≤0.5; 0 ≤z ≤0.5; 0 ≤w ≤0.2 and x + y + z + w <2;
- a compound iii) of formula LiₓMn_{2-y-z}M'_{y}M"_{z}O₄ where M' and M" are selected from the group consisting of B, Mg, Al, Si, Ca, Ti, V, Cr, Fe, Co, Ni, Cu, Zn, Y, Zr and Mo; M' and M" being different from each other; and 1 ≤x ≤ 1.4; 0≤y≤0.6 ; 0≤z≤0.2;
said mixture including compound i) ;
β) an outer layer (2) comprises an active material comprising at least 90% of a compound of formula LiₓFe_{1-y}M_{y}PO₄ in which M is selected from the group consisting of B, Mg, Al, Si, Ca, Ti, V, Cr, Mn, Co, Ni, Cu, Zn, Y, Zr, Nb and Mo; and 0.8 ≤x≤ 1.2; 0 ≤y ≤0.6.

2. The electrode according to claim 1, comprising between the first and the outer layer, at least one intermediate layer (3) comprising at least one compound selected from the compounds i), ii) and iii).

3. The electrode according to claim 2, wherein the intermediate layer comprises a mixture of at least two compounds selected from the compounds i), ii) and iii).

4. The electrode according to one of claims 1 to 3, wherein the first layer comprises a mixture of compounds i) and iii).

5. The electrode according to claim 4, wherein M' or M" of compound i) is Fe.

6. The electrode according to one of claims 4 and 5, wherein y and/or z are less than 0.40.

7. The electrode according to one of claims 4 to 6, wherein M' or M" of compound iii) is Al.

8. The electrode according to claim 7, wherein y and/or z of compound iii) are less than 0.10.

9. The electrode according to one of claims 4 to 8, wherein the weight percentage of compound i) is between 10% and 90% and the weight percentage of compound iii) is between 90% and 10% of the weight of the first layer.

10. The electrode according to claim 9, wherein the weight percentage of compound i) is between 10% and 30%, and the weight percentage of compound iii) is between 90% and 70% of the weight of the first layer.

11. The electrode according to one of claims 1 to 3, wherein the first layer further comprises a mixture of the compounds ii) and iii).

12. The electrode according to one of claims 1 to 3, wherein the first layer comprises a mixture of compounds i) and ii).

13. The electrode according to claim 12 wherein the weight percentage of compound i) is between 10% and 90% and the weight percentage of compound ii) is between 90% and 10% of the weight of the first layer.

14. The electrode according to any preceding claim, wherein the percentage by weight of the outer layer is less than 20% of the weight of the first layer, preferably less than 10%, more preferably less than 5%.

15. The electrode according to any preceding claim, wherein each face of the current collector is covered with a stack of said at least two layers.

16. A lithium secondary cell comprising:
- at least one positive electrode which is an electrode according to any preceding claim;
- at least a negative electrode comprising a material capable of intercalating and de-intercalating lithium into/from its structure.

17. A method for manufacturing an electrode comprising:
a) providing a current collector;
b) depositing onto at least one face of the current collector at least two layers (1, 2, 3),
α) a first layer (1) being in contact with the face of the current collector and comprising a mixture of at least two compounds chosen from:
- a compound i) of formula LiₓMn_{1-y-z}M'_{y}M"_{z}PO₄ where M' and M" are selected from the group consisting of B, Mg, Al, Si, Ca, Ti, V, Cr, Fe, Co, Ni, Cu, Zn, Y, Zr, Nb and Mo; M' and M" being different from each other; and 0.8 ≤x≤ 1.2, 0 ≤y ≤0.6, 0 ≤z ≤0.2;
- a compound ii) of formula LiₓM_{2-x-y-z-w}M'_{y}M"_{z}M'"_{w}O₂ where M, M', M" and M'" are selected from the group consisting of B, Mg, Al, Si, Ca, Ti, V, Cr, Mn, Fe, Co, Ni, Cu, Zn, Y, Zr, Nb and Mo, provided that at least M or M' or M" or M'" is selected from Mn, Co, Ni, or Fe; M, M', M" and M'" being different from each other; and 0.8 ≤x≤ 1.4; 0 ≤y ≤0.5; 0 ≤z ≤0.5; 0 ≤w ≤0.2 and x + y + z + w <2;
- a compound iii) of formula LiₓMn_{2-y-z}M'_{y}M"_{z}O₄ where M' and M" are selected from the group consisting of B, Mg, Al, Si, Ca, Ti, V, Cr, Fe, Co, Ni, Cu, Zn, Y, Zr, Nb and Mo; M' and M" being different from each other; and 1 ≤x ≤ 1.4; 0≤y≤0.6 ; 0≤z≤0.2;
said mixture including compound i) ;
β) an outer layer (2) comprising an active material comprising at least 90% of a compound of formula LiₓFe_{1-y}M_{y}PO₄ in which M is selected from the group consisting of B, Mg, Al, Si, Ca, Ti, V, Cr, Mn, Co, Ni, Cu, Zn, Y, Zr, Nb and Mo and 0.8 ≤x≤ 1.2; 0 ≤y ≤0. 6.
